# EUROPEAN PATENT APPLICATION

(11) **EP 4 593 055 A1**
(43) Date of publication of application: **30.07.2025**
(21) Application number: 24195999.8
(22) Date of filing: 22.08.2024
(51) Int. Cl.: H01H 50/00

(54) **STRUCTURE FOR SEPARATING STRONG AND WEAK ELECTRICITY OF ALTERNATING CURRENT CHARGING STATION**

(30) Priority: 22.01.2024 CN 202420155295 U
(71) Applicant: Xiamen Guangpu Intelligent Charging Technology Co., Ltd., Xiamen City 361000 (CN)
(72) Inventor: LIN, Guanjian, Xiamen City, 361000 (CN); CHEN, Haihui, Xiamen City, 361000 (CN); QIU, Shoufeng, Xiamen City, 361000 (CN)
(74) Representative: Verscht, Thomas Kurt Albert

(57) **Abstract**

A structure for separating strong and weak electricity of an alternating current (AC) charging station, characterized in that, it comprises a relay, a printed circuit board (PCB), a voltage transformer and a current transformer; an input terminal and an output terminal of the relay respectively extend with a first conductive connecting member and a second conductive connecting member, and the voltage transformer and the current transformer form a mechanical fixed connection and a conductive connection with the input terminal and the output terminal of the relay respectively through the first conductive connecting member and the second conductive connecting member; pins of the relay, the voltage transformer and the current transformer are electrically connected to the PCB; and when the relay is turned on, the strong electricity directly flows out through the voltage transformer, the relay, and the current transformer, and the weak electricity flows out through PCB.

## Description

### RELATED APPLICATIONS

This application claims priority to Chinese patent application number 202420155295.9, filed on January 22, 2024. Chinese patent application number 202420155295.9 is incorporated herein by reference.

### FIELD OF THE DISCLOSURE

The present disclosure relates to a charging device, and in particular relates to a charging station.

### BACKGROUND OF THE DISCLOSURE

A relay is an electrical control device and a device that causes a predetermined step change of a control amount in an electrical output circuit when an input amount (excitation amount) changes to meet specified requirements, which has an interactive relationship between a control system (also known as an input circuit) and a controlled system (also known as an output circuit) and is usually used in automatic control circuits, which is actually an "automatic switch" using a small current to control a large current so as to provide functions, such as automatic regulation, safety protection, and converter circuits, in the circuits.

The existing relays used for charging stations need to be soldered onto a printed circuit board (PCB), causing strong and weak electricity tracing simultaneously on the PCB, resulting in greater temperature rise and instability of the charging stations.

### BRIEF SUMMARY OF THE DISCLOSURE

The main technical problem that the present disclosure seeks to solve is to provide a structure for separating strong and weak electricity of an alternating current charging station to reduce temperature rise on a printed circuit board (PCB).

In order to solve the aforementioned technical problems, the present disclosure provides a structure for separating strong and weak electricity of an alternating current (AC) charging station, characterized in that, it comprises a relay, a printed circuit board (PCB), a voltage transformer and a current transformer;

An input terminal and an output terminal of the relay respectively extend with a first conductive connecting member and a second conductive connecting member, and the voltage transformer and the current transformer form a mechanical fixed connection and a conductive connection with the input terminal and the output terminal of the relay respectively through the first conductive connecting member and the second conductive connecting member;

Pins of the relay, the voltage transformer and the current transformer are electrically connected to the PCB; and

When the relay is turned on, the strong electricity directly flows out through the voltage transformer, the relay, and the current transformer, and the weak electricity flows out through the PCB.

In a preferred embodiment, the second conductive connecting member comprises a first part connected to the output terminal of the relay and a second part connected to a wire of an output power supply.

In a preferred embodiment, the first part and the second part have an overlapping part, the overlapping part comprises a screw hole, and a screw bolt passes through the screw hole to enable the first part to be conductively connected to the second part.

In a preferred embodiment, the first part passes through the current transformer to be conductively connected to the current transformer by overlapping.

In a preferred embodiment, the first conductive connecting member comprises a first part connected to the input terminal of the relay and one or more second parts connected to a wire of an input power supply, a number of the one or more second parts is N+1, wherein N is a phase number of the input power supply; and the first conductive connecting member further comprises a third part connected to the first part and the one or more second parts.

In a preferred embodiment, the first part is conductively connected to the third part, the one or more second parts and the third part have overlapping parts, the overlapping parts comprise screw holes, and screw bolts pass through the screw holes to enable the first part, the one or more second parts and the third part to be conductively connected.

In a preferred embodiment, the first part is parallel to the one or more second parts and is perpendicular to the third part.

In a preferred embodiment, the first part passes through the voltage transformer to be conductively connected to the voltage transformer by overlapping.

Compared with the existing techniques, the technical solution of the present disclosure has the following advantages.

The present disclosure provides the structure for separating the strong and weak electricity of the alternating current charging station to combine a current transformer, a voltage transformer (i.e., a leakage current transformer) and a relay into a module, so that the strong electricity does not pass through the PCB so as to separate the strong and weak electricity and to greatly reduce temperature rise of a product.

### BRIEF DESCRIPTION OF THE DRAWINGS

FIG. 1 is a diagrammatic view of a structure for separating strong and weak electricity in a preferred embodiment of the present disclosure;
FIG. 2 is a diagrammatic view of the structure for separating the strong and weak electricity in the preferred embodiment of the present disclosure at another angle;
FIG. 3 is a diagrammatic view of a first conductive connecting member in the preferred embodiment of the present disclosure; and
FIG. 4 is a diagrammatic view of a second conductive connecting member in the preferred embodiment of the present disclosure.

### DETAILED DESCRIPTION OF THE EMBODIMENTS

The technical solutions in the embodiments of the present disclosure will be clearly and completely described in combination with the accompanying drawings in the embodiments of the present disclosure; and it is obvious that the described embodiments are some embodiments of the present disclosure instead of all embodiments, and all other embodiments fall within the protection scope of the present disclosure provided that they are obtained by a person of ordinary skill in the art based on the embodiments of the present disclosure without creative works.

In the description of the present disclosure, it should be noted that the terms, such as "upper", "lower", "inner", "outer", "top/bottom", indicate orientations or positional relationships based on orientations and positional relationships shown in the drawings, so as to easily describe the present disclosure and simplify the description, rather than indicating or implying that the referenced or implied device or element should have a specific orientation or be constructed and operated in a specific orientation and therefore should not be understood as a limitation of the present disclosure. Further, the terms "first" and "second" are merely used for description and should not be understood as indicating or implying relative importance.

In the description of the present disclosure, unless otherwise specified and limited, it should be noted that the terms, such as "installed", "disposed", "sleeved/socketed", and "connected", should develop broad understanding, for example, "connected" can be a wall mountable connection, a detachable connection, or an integrated connection, a mechanical connection, an electrical connection, a direct connection, an indirect connection through an intermediator, or communication between inner portions of two members, for a person of ordinary skill in the art, the specific meaning of the terms in the present disclosure can be understood under specific conditions.

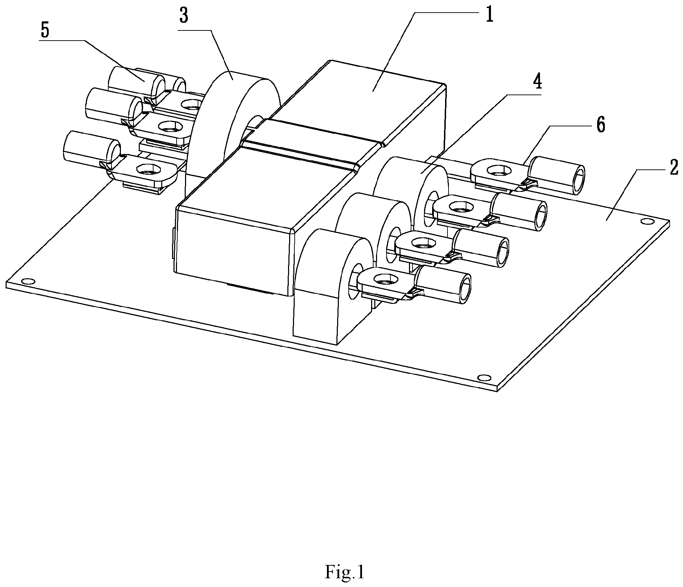

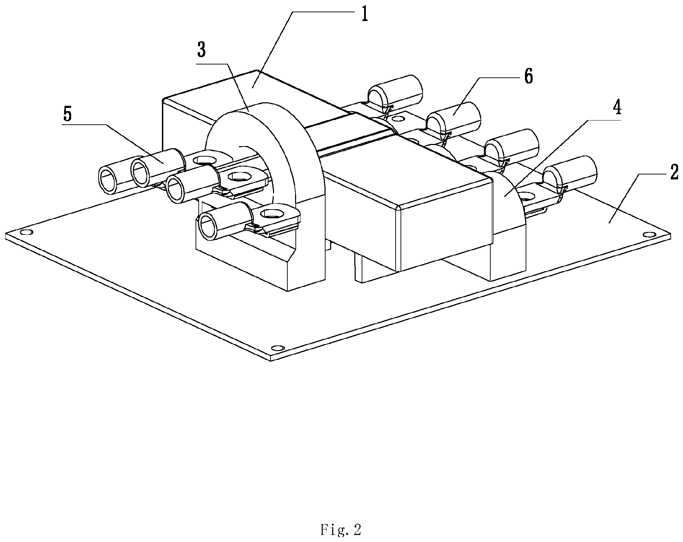

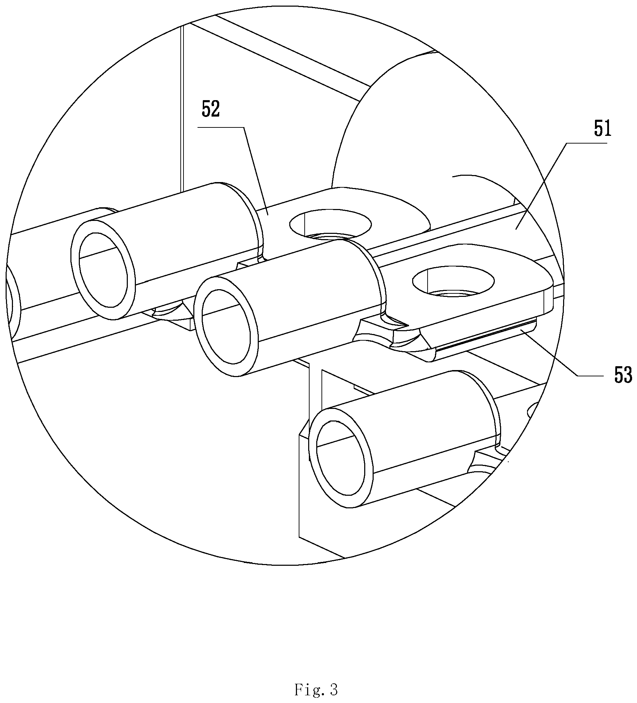

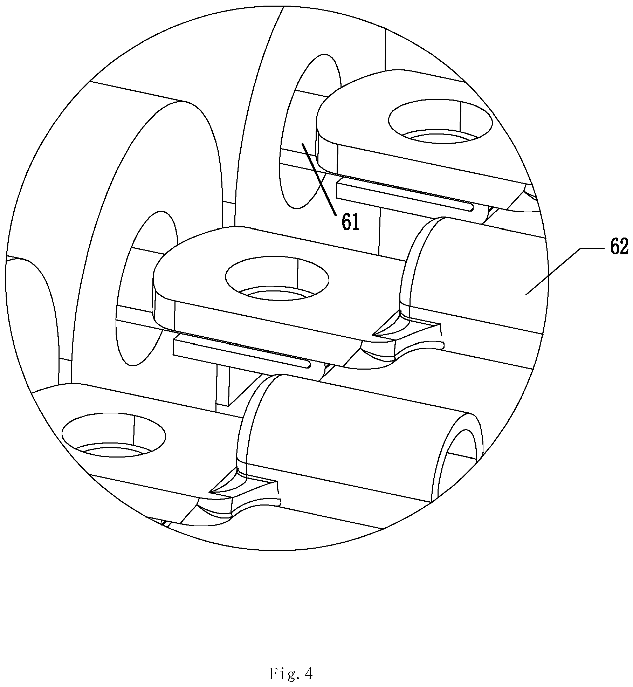

Referring to FIGS. 1-4, this embodiment provides a structure for separating strong and weak electricity (i.e., higher and lower current) of an alternating current (AC) charging station, which comprises a relay 1, a printed circuit board (PCB) 2, a voltage transformer 3 and a current transformer 4, for example, the strong electricity is current no less than 1 ampere (A) and the weak current is current less than 1 A;

An input terminal and an output terminal of the relay 1 respectively extend with a first conductive connecting member 5 and a second conductive connecting member 6, and the voltage transformer 3 and the current transformer 4 form a mechanical fixed connection and a conductive connection with the input terminal and the output terminal of the relay 1 respectively through the first conductive connecting member 5 and the second conductive connecting member 6;

Pins of the relay 1, the voltage transformer 3 and the current transformer 4 are electrically connected to the PCB; and

When the relay 1 is turned up, the strong electricity directly flows out through the voltage transformer 3, the relay 1, the current transformer 4, and the weak electricity flows into the PCB 2 and then flow out through the PCB 2.

The structure for separating the strong and the weak electricity of the charging station combines the current transformer 4, a leakage current transformer (i.e., the voltage transformer 5) and the relay 1 into a module, so that the strong electricity does not pass through the PCB 2 to achieve separation of the strong and weak electricity and to greatly reduce temperature rise of a product.

Specifically, in this embodiment, the first conductive connecting member 5 comprises a first part 51 connected to the input terminal of the relay 1 and one or more second parts 52 connected to a wire of an input power supply. A number of the one or more second parts 52 is N+1, wherein N is a phase number of the input power supply; and the first conductive connecting member 5 further comprises a third part 53 connected to the first part 51 and the one or more second parts 52. For example, in this embodiment, the input power supply is a three-phase power supply, so the number of the one or more second parts 52 for connecting wires of the three-phase power supply and the ground is 4.

The third part 53 has overlapping parts with the one or more second parts 52, the first part 51 is conductively connected to the third part 53. The overlapping parts comprise screw holes, and screw bolts pass through the screw holes to enable the first part 51, the one or more second parts 52 and the third part 53 to be conductively connected. Further, the first part 51 is parallel to the one or more second parts 52 and is perpendicular to the third part 53 due to the presence of only one of the first part 51 and four of the one or more second parts 52. The first part 51 and the multiple of the one or more second parts 52 can be conductively connected together through the third part 53.

However, a state of the output terminal of the relay 1 is in one-to-one correspondence, that is, one output terminal is connected to one output wire (i.e., a wire of an output power supply). Therefore, the second conductive connecting member 6 at the output terminal only needs one or more first parts 61 and one or more second parts 62 without a third part. The one or more first parts 61 and the one or more second parts 62 have one or more overlapping parts, the one or more overlapping parts comprise one or more screw holes, and one or more screw bolts pass through the one or more screw holes to enable the one or more first parts 61 to be conductively connected to the one or more second parts 62. Structures of the one or more first parts 61 and the one or more second parts 62 of the second conductive connecting member 6 and the first part 51 and the one or more second parts 52 of the first conductive connecting member 5 are the same and will not be further described.

In order for the conductive connecting members to conductively contact the voltage transformer 3 or the current transformer 4, the first parts 51 and 61 pass through the voltage transformer 3 or the current transformer 4 and overlap the voltage transformer 3 or the current transformer 4 to form a conductive connection.

The invention may be summarized as follows: A structure for separating strong and weak electricity of an alternating current (AC) charging station, characterized in that, it comprises a relay, a printed circuit board (PCB), a voltage transformer and a current transformer; an input terminal and an output terminal of the relay respectively extend with a first conductive connecting member and a second conductive connecting member, and the voltage transformer and the current transformer form a mechanical fixed connection and a conductive connection with the input terminal and the output terminal of the relay respectively through the first conductive connecting member and the second conductive connecting member; pins of the relay, the voltage transformer and the current transformer are electrically connected to the PCB; and when the relay is turned on, the strong electricity directly flows out through the voltage transformer, the relay, and the current transformer, and the weak electricity flows out through PCB.

The aforementioned description is merely specific embodiments of the present disclosure, while the design concept of the disclosure is not limited thereto, it is intended that the protection scope of the present disclosure cover non-substantive modifications of the present disclosure provided they are made without departing from the technical scope of the present disclosure based on the concept by any technical person of knowledge in the technical art.

## Claims

1. A structure for separating strong and weak electricity of an alternating current (AC) charging station, **characterized in that**, it comprises a relay, a printed circuit board (PCB), a voltage transformer and a current transformer;
an input terminal and an output terminal of the relay respectively extend with a first conductive connecting member and a second conductive connecting member, and the voltage transformer and the current transformer form a mechanical fixed connection and a conductive connection with the input terminal and the output terminal of the relay respectively through the first conductive connecting member and the second conductive connecting member;
pins of the relay, the voltage transformer and the current transformer are electrically connected to the PCB; and
when the relay is turned on, the strong electricity directly flows out through the voltage transformer, the relay, and the current transformer, and the weak electricity flows out through the PCB.

2. The structure for separating the strong and the weak electricity of the AC charging station according to claim 1, **characterized in that**: the second conductive connecting member comprises a first part connected to the output terminal of the relay and a second part connected to a wire of an output power supply.

3. The structure for separating the strong and the weak electricity of the AC charging station according to claim 2, **characterized in that**: the first part and the second part have an overlapping part, the overlapping part comprises a screw hole, and a screw bolt passes through the screw hole to enable the first part to be conductively connected to the second part.

4. The structure for separating the strong and the weak electricity of the AC charging station according to claim 2 and/or 3, **characterized in that**: the first part passes through the current transformer to be conductively connected to the current transformer by overlapping.

5. The structure for separating the strong and the weak electricity of the AC charging station according to any one or more of claims 1 to 4, **characterized in that**:
the first conductive connecting member comprises a first part connected to the input terminal of the relay and one or more second parts connected to a wire of an input power supply, a number of the one or more second parts is N+1, wherein N is a phase number of the input power supply; and the first conductive connecting member further comprises a third part connected to the first part and the one or more second parts.

6. The structure for separating the strong and the weak electricity of the AC charging station according to claim 5, **characterized in that**: the first part is conductively connected to the third part, the one or more second parts and the third part have overlapping parts, the overlapping parts comprise screw holes, and screw bolts pass through the screw holes to enable the first part, the one or more second parts and the third part to be conductively connected.

7. The structure for separating the strong and the weak electricity of the AC charging station according to claim 5 and/or 6, **characterized in that**: the first part is parallel to the one or more second parts and is perpendicular to the third part.

8. The structure for separating the strong and the weak electricity of the AC charging station according to any one or more of claims 5 to 7, **characterized in that**:
the first part passes through the voltage transformer to be conductively connected to the voltage transformer by overlapping.
